# EUROPÄISCHE PATENTSCHRIFT

(11) **EP 2 715 168 B1**
(45) Veröffentlichungstag und Bekanntmachung des Hinweises auf die Patenterteilung: **11.10.2017**
(21) Anmeldenummer: 12723641.2
(22) Anmeldetag: 18.05.2012
(51) Int. Cl.: F16C 33/10

(54) **GLEITLAGERSCHALE, INSBESONDERE FÜR MOTORISCHE ANWENDUNGEN**
SLIDING BEARING SHELL, IN PARTICULAR FOR MOTOR-DRIVEN APPLICATIONS
COQUILLE DE COUSSINET LISSE, EN PARTICULIER POUR APPLICATIONS MOTRICES

(30) Priorität: 03.06.2011 DE 102011103455
(43) Veröffentlichungstag der Anmeldung: 09.04.2014
(73) Patentinhaber: KS Gleitlager GmbH, 68789 St. Leon-Rot (DE); Bayerische Motoren Werke Aktiengesellschaft, 80809 München (DE)
(72) Erfinder: SCHÖRKHUBER, Christoph, A-4451 Garsten (AT); DENGLER, Harald, 55268 Nieder-Olm (DE); SCHAUBMAIR, Josef, 3350 Haag (AT)
(74) Vertreter: DREISS Patentanwälte PartG mbB
(86) Internationale Anmeldenummer: PCT/EP2012/059273
(87) Internationale Veröffentlichungsnummer: WO 2012/163695

(56) Entgegenhaltungen:
- DE-A1-102005 036 689
- DE-B- 1 233 675
- GB-A- 744 287
- US-A- 4 175 799

## Beschreibung

Die Erfindung betrifft eine Gleitlagerschale insbesondere für motorische Anwendungen, insbesondere für Anwendungen mit Schmiermittelzufuhr im Betrieb, insbesondere für Haupt- oder Pleuellagerstellen, mit den Merkmalen des Oberbegriffs des Anspruchs 1. Die Gleitlagerschale umfasst vorzugsweise auch eine metallische Stützschicht, insbesondere aus Stahl, auf die die Gleitschicht aufgebracht ist. Die Gleitschicht kann gegebenenfalls eine zusätzliche Overlayschicht, wie Sputterschicht oder galvanische Schicht oder Gleitlack, aufweisen. Die Gleitlagerschale kann weiter mit einer zum Gleitpartner hin offenen Ölnut und einer Ölzufuhröffnung, welche in der Ölnut mündet, ausgebildet sein. Eine gattungsgemäße Gleitlagerschale ist bekannt aus DE 10 2005 036 689 A1.

Gleitlagerschalen für Haupt- und Pleuellageranwendungen bei Verbrennungsmotoren sind bekannt. Typischerweise ist im Bereich der Trennfuge zwischen oberer und unterer Lagerschale, die zusammen den Zapfen oder Wellenabschnitt umgreifen, d. h. in einem Endabschnitt in Umfangsrichtung zu den Teilungsflächen hin, eine Wanddickenreduzierung ausgehend von der Gleitfläche der Lagerschale ausgebildet. Diese Wanddickenreduzierung wird typischerweise als Freilegung oder Freistellung bezeichnet. Hierdurch sollen Toleranzen ausgeglichen werden, wie Form- und Lagetoleranzen der Lagergehäusebohrung, der Versatz des Lagerdeckels zur Lagerbasis, sowie sonstige Toleranzen bei den eine Gleitlagerstelle bildenden Lagerschalen. Durch die Freilegung wird auch verhindert, dass ein Schmierfilm durch vorstehende Kanten infolge der Lagerschalentoleranzen gestört wird. Ferner dient die Freilegung zum Ausgleich von geometrischen Veränderungen im Lagersystem unter Temperatureinfluss und infolge des Betriebs.

Bei hier in Rede stehenden Gleitlagerschalen, die zumindest bei motorischen oder motorennahen Anwendungen eine Schmiermittelzufuhr im Betrieb erfahren, stellt sich außerdem das Problem der Ölführung innerhalb der Lagerstelle. Hierfür verwenden vorbekannte Gleitlagerschalen zumeist Ölnuten mit einer durch die Gleitlagerschale hindurchgehenden Ölzufuhröffnung. Diese Ölnuten sind in Umfangslänge erstreckt und zum Gleitpartner hin offen. Zur Reduzierung des Ölaustritts aus dem Lagerspalt zwischen Lagerschale und Gleitpartner münden die Ölnuten zumeist nicht in den jeweiligen Teilungsflächen, sondern in einem Abstand hierzu. Sie weisen in Richtung auf die Teilungsflächen auch häufig eine stetig abnehmende Tiefe auf, was als sichelförmige Ausbildung der Ölnut bezeichnet wird. Hierdurch konnte der Ölaustritt aus dem Schmierspalt bereits beträchtlich verringert werden, was die hydrodynamische Stabilität der Lagerstelle im Betrieb verbessert hat.

Der vorliegenden Erfindung liegt ausgehend von einer gattungsgemäßen Gleitlagerschale die Aufgabe zugrunde, das Schmiermittelmanagement in der Lagerstelle im Betrieb weiter zu verbessern und außerdem die Herstellbarkeit zu vereinfachen.

Diese Aufgabe wird durch eine Gleitlagerschale mit den Merkmalen des Anspruchs 1 gelöst.

Wenn zusätzlich Ölnuten verwendet werden, so können diese vor dem erwähnten wanddickenreduzierten Endbereich auslaufen und insbesondere sichelförmig, also mit variierter Tiefe in radialer Richtung ausgebildet sein, oder sie können bis in die Endflächen münden. Im letzteren Fall ist die Schmutzausspülung aus den Ölnuten wesentlich verbessert, wobei der Schmiermittelaustritt insgesamt infolge der erfindungsgemäßen Ausbildung mit den seitlichen Dichträndern begrenzt ist.

Erfindungsgemäß ist der jeweilige Dichtrand bei der Lagerschale gebildet, indem die Wanddickenreduzierung dort nicht vorgenommen ist. Die Wanddickenreduzierung in einem Endabschnitt bei einem oder beiden Umfangsenden der Gleitlagerschale kann beispielsweise durch spanabhebende Bearbeitung, also z. B. Fräsen, oder durch eine schleifende Bearbeitung oder auch durch einen Prägevorgang ausgebildet werden. Dieser Vorgang wird dann gerade nicht über die gesamte Breite der Lagerschale ausgeführt, so dass beidseitig der erfindungsgemäße Dichtrand stehen bleibt, der selbst in Umfangsrichtung erstreckt ist.

Weiter erweist es sich als vorteilhaft, wenn der Dichtrand sich ausgehend von der Teilungsfläche über eine Umfangslänge von wenigstens 5° und insbesondere von wenigstens 10° und insbesondere bis höchstens 35°, insbesondere bis höchstens 30° erstreckt.

In Weiterbildung der Erfindung wird vorgeschlagen, dass der Dichtrand eine Breite in axialer Richtung und gemessen in der Gleitfläche zum Gleitpartner von bis zu 3,0 mm, und weiter insbesondere von wenigstens 1 mm aufweist. Die Gleitfläche zum Gleitpartner ist die zum Gleitpartner hin weisende Oberfläche des Dichtrands. Der Dichtrand kann auch eine nach oben zur Gleitfläche verjüngte Form aufweisen, also im Schnitt und in Umfangsrichtung betrachtet etwa trapezförmig ausgebildet sein.

Erfindungsgemäß wurde weiter ermittelt, dass die Lagerschale im Bereich des Dichtrands in radialer Richtung vorzugsweise eine um 0,005 - 0,1 mm größere Wanddicke aufweist als der wanddickenreduzierte Endbereich in axialer Richtung dazwischen. Insbesondere ist die Wanddicke im Bereich des Dichtrands um 0,01 - 0,08 mm, insbesondere um 0,015 - 0,07 mm und weiter um 0,02 - 0,06 mm größer als der wanddickenreduzierte Endbereich. Sofern der wanddickenreduzierte Endbereich, also die Freilegung im Bereich der Teilungsflächen, seinerseits eine variierende Tiefe, also die Gleitlagerschale in diesem Bereich eine in Umfangsrichtung variierende, zu den Trennflächen hin stetig abnehmende Wanddicke aufweist, so sind die vorstehend erwähnten Wanddickenunterschiede an der Stelle des größten Unterschieds zu nehmen.

Es erweist sich weiter als vorteilhaft, wenn der Dichtrand in seiner gesamten Erstreckung in Umfangsrichtung in der Gleitfläche zum Gleitpartner liegt, also gewissermaßen die dem Gleitpartner zugewandte Oberseite, also die radiale Innenseite der Lagerschale, stetig in Umfangsrichtung fortsetzt.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figur 1 eine perspektivische Ansicht einer erfindungsgemäß ausgebildeten Gleitlagerschale;
Figur 2 eine teilweise Schnittansicht der Gleitlagerschale nach Figur 1;
Figur 2a ein Detail X aus Figur 2;
Figur 3 eine weitere Ansicht der Gleitlagerschale mit Schnittebene III-III in Figur 2 und
Figur 4 eine perspektivische Ansicht einer weiteren Ausführungsform einer erfindungsgemäßen Gleitlagerschale mit Ölnut.

Die Figuren zeigen eine erfindungsgemäße Gleitlagerschale 2, insbesondere für Haupt- und Pleuellageranwendungen bei einem Verbrennungsmotor. Hierfür werden zwei derartiger Gleitlagerschalen 2 zur Bildung einer kreisförmigen Lagerstelle zusammengesetzt und in einer hierfür vorgesehenen Lagerausnehmung im großen Auge eines Pleuels für Pleuellageranwendungen bzw. in Wangen des Kurbelgehäuses zur Lagerung der Kurbelwelle eingesetzt. Die dargestellte Gleitlagerschale 2 umfasst eine metallische Stützschicht 4 typischerweise aus Stahl und eine darauf aufgebrachte Gleitschicht 6 aus einer metallischen Gleitlagerlegierung. Zumindest grundsätzlich lässt sich die Erfindung auch bei Gleitlagerschalen ohne zusätzliche Stützschicht einsetzen. Die Gleitlagerschale 2 umfasst des Weiteren zwei die jeweiligen Umfangsenden bildende Teilungsflächen 8, 10, die häufig auch als Trennflächen bezeichnet werden, sowie zwei axiale Umfangsseiten 12, 14, die häufig auch als axiale Stirnseiten bezeichnet werden. Demnach unterscheidet man bei derartigen Gleitlagerschalen eine axiale Richtung 16, eine radiale Richtung 18 sowie eine Umfangsrichtung 20.

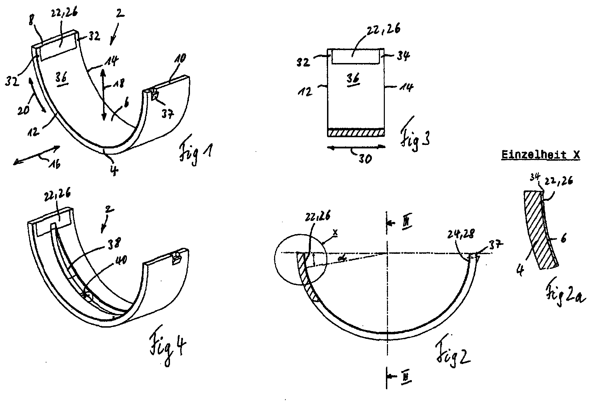

Die dargestellte Gleitlagerschale 2 umfasst im beispielhaft dargestellten Fall in Endabschnitten 22, 24 im Bereich beider Umfangsenden eine Freilegung 26, 28, d. h. eine Wanddickenreduzierung der Gleitlagerschale in dem betreffenden Endabschnitt 22, 24, die schematisch und nicht maßstabsgetreu auch aus Figuren 2, 2a ersichtlich ist. Die Freilegung 26, 28 ist jedoch nicht über die gesamte Breite 30 der Lagerschale 2 ausgebildet, sondern sie endet in einem Abstand in axialer Richtung von den Umfangsseiten 12, 14. Auf diese Weise ist im Bereich der axialen Umfangsseiten 12, 14 ein in Umfangsrichtung 20 verlaufender Dichtrand 32, 34 vorgesehen, welcher den wanddickenreduzierten Endabschnitt 22, 24 beidseits flankiert und so eine Barriere für den Öldurchfluss bildet. Die Erstreckung des Dichtrands 32, 34 in Umfangsrichtung 20 sowie die Breite in axialer Richtung 16 bewegt sich in den eingangs geschilderten Bereichsgrenzen, ebenso der Unterschied der Wanddicke im Bereich des Dichtrands 32, 34 zur minimalen Wanddicke im Bereich der Freilegung 26, 28 der Endbereiche 22, 24.

Im beispielhaft dargestellten Fall verläuft die Freilegung 26, 28 ungefähr rampenförmig in Umfangsrichtung 20 mit einer ungefähr konstanten Steigung, d. h. der jeweilige Endabschnitt 22, 24 bildet zumindest nahezu eine Ebene. Es ist jedoch auch denkbar, dass die Freilegung beispielsweise von einem Fräser derart gebildet ist, dass die Endabschnitte 22, 24 eine gekrümmte, wenngleich stetige Form Auch der Übergang zu dem flankierenden Dichtrand kann ausgehend von der Freilegung 26, 28 stufenförmig oder rampenförmig ausgebildet sein oder gekrümmt verlaufen.

In dem bevorzugt dargestellten Fall liegt der betreffende Dichtrand 32, 34 entlang seiner gesamten Erstreckung in Umfangsrichtung 20 in der Gleitfläche 36 zum nicht dargestellten Gleitpartner.

Die Erstreckung des Dichtrands 32, 34 in Umfangsrichtung 20 entspricht im beispielhaft dargestellten Fall der Erstreckung der Freilegung 26, 28. Ausgehend von einer Teilungsfläche 8, 10 ist die Erstreckung in Figur 2 in Form eines Winkelsegments α angedeutet, dessen Projektion in Figur 3 ersichtlich ist.

Die Lagerschale 2 weist desweiteren an ihrer zur Lagerausnehmung weisenden Außenseite eine sogenannte Haltenase 37 auf, die in an sich bekannter Weise durch eine verdrängende Verformung ausgebildet ist und mit entsprechenden Ausnehmungen in der Lagerausnehmung zusammenwirkt.

Schließlich zeigt Figur 4 eine weitere Ausführungsform einer erfindungsgemäßen Gleitlagerschale 2, die sich von der in Figur 1 dargestellten dadurch unterscheidet, dass sie eine in Umfangsrichtung 20 erstreckte Ölnut 38, in die eine Ölzuführöffnung 40 mündet, aufweist. Die Ölnut 38 ist im beispielhaft dargestellten Fall mit in Umfangsrichtung 20 variierender Tiefe, also mithin sichelförmig ausgebildet. Sie mündet in Umfangsrichtung 20 jeweils bei den wanddickenreduzierten Endabschnitten 22, 24, also in den Freilegungen 26, 28, wodurch Partikelabrieb aus der Ölnut 38 verhältnismäßig gut ausgespült werden kann.

Durch den beidseitigen Dichtrand 32 bzw. 34 im Bereich der Teilungsflächen 8, 10 der Gleitlagerschale wird bei gutem Schmutzaustrag durch die Freilegungen 26, 28 gleichwohl eine verbesserte Abdichtung des Schmierspalts realisiert, wodurch ein übermäßiger Schmiermittelölaustritt aus dem Schmierspalt verhindert werden kann.

## Patentansprüche

1. Gleitlagerschale (2), insbesondere für motorische Anwendungen, insbesondere für Haupt- oder Pleuellagerstellen, mit einer Gleitschicht (6) aus einer metallischen Gleitlagerlegierung, mit zwei die Umfangssenden der Gleitlagerschale bildenden Teilungsflächen (8, 10) und mit zwei axialen Umfangsseiten (12, 14) und mit einer Gleitfläche (36) zum Gleitpartner hin, wobei die Gleitlagerschale ausgehend von einem metallischen Platinenabschnitt ungefähr auf Halbkreisform gebracht ist und in einem jeweiligen Endabschnitt (22, 24) in Umfangsrichtung (20) ausgehend von der Gleitfläche (36) zu den Teilungsflächen (8, 10) hin wanddickenreduziert ausgebildet ist, wobei im Bereich beider wanddickenreduzierter Endabschnitte (22, 24) beidseits im Bereich der axialen Umfangsseiten (12, 14) ein in Umfangsrichtung (20) verlaufender Dichtrand (32, 34) vorgesehen ist, der den wanddickenreduzierten Endabschnitt (22, 24) beidseits flankiert und so eine Barriere für den Öldurchfluss bildet, wobei der Dichtrand (32, 34) gebildet ist, indem die Wanddickenreduzierung dort nicht vorgenommen ist und wobei der Dichtrand (32, 34) eine Breite in axialer Richtung (16) und gemessen in der Gleitfläche (36) zum Gleitpartner bis maximal 5,0 mm aufweist und wobei die Gleitlagerschale in dem wanddickenreduzierten Endabschnitt (22, 24) eine in Umfangsrichtung (20) zu den Teilungsflächen (8, 10) hin stetig abnehmende Wanddicke aufweist, **dadurch gekennzeichnet, dass** der Dichtrand (32, 34) sich ausgehend von der Teilungsfläche (8, 10) über eine Umfangslänge von wenigstens 5° und bis höchstens 35° erstreckt und dass die Lagerschale im Bereich des Dichtrands (32, 34) in radialer Richtung (18) eine um maximal 0,1 mm größere Wanddicke aufweist als der wanddickenreduzierte Endbereich (22, 24) in axialer Richtung (16) dazwischen.

2. Gleitlagerschale nach Anspruch 1, **dadurch gekennzeichnet, dass** der Dichtrand (32, 34) sich ausgehend von der Teilungsfläche (8, 10) über eine Umfangslänge von wenigstens 10° und insbesondere bis höchstens 30° erstreckt.

3. Gleitlagerschale nach Anspruch 1 oder 2, **dadurch gekennzeichnet, dass** der Dichtrand (32, 34) eine Breite in axialer Richtung (16) und gemessen in der Gleitfläche (36) zum Gleitpartner von bis zu 3,0 mm, und weiter insbesondere von wenigstens 0,5 mm und weiter von wenigstens 1 mm aufweist.

4. Gleitlagerschale nach einem oder mehreren der vorstehenden Ansprüche, **dadurch gekennzeichnet, dass** die Lagerschale im Bereich des Dichtrands (32, 34) in radialer Richtung (18) eine um 0,01 - 0,08 mm, insbesondere um 0,015 - 0,07 mm und weiter insbesondere um 0,02 - 0,06 mm größere Wanddicke aufweist als der wanddickenreduzierte Endbereich (22, 24) in axialer Richtung (16) dazwischen.

5. Gleitlagerschale nach einem oder mehreren der vorstehenden Ansprüche, **dadurch gekennzeichnet, dass** der Dichtrand (32, 34) in seiner gesamten Umfangsrichtung (20) in der Gleitfläche (36) zum Gleitpartner liegt.

## Claims

1. Slide bearing shell (2), in particular for engine applications, in particular for main- or connecting rod bearing points, with a slide layer (6) made of a metallic slide bearing alloy, with two separation planes (8,10) forming the circumferential ends of the bearing shell, and with two axial circumferential sides (12,14) and with a sliding surface (36) facing the sliding partner, wherein the slide bearing shell is roughly brought to a semicircle shape with a metallic plate section as its starting point, and is formed in a respective end section (22,24) with reducing wall thickness in circumferential direction (20) starting from the sliding surface (36) towards the separation planes (8,10), wherein in the area of both of the reduced wall thickness end sections (22,24) a sealing edge (32,34) is provided on both sides extending in circumferential direction in the area of the axial circumferential sides (12, 14), wherein the sealing edge flanks the reduced wall thickness end section (22,24) on both sides and therefore forms a barrier for the oil flow, wherein the sealing edge (32,34) is formed in that the wall thickness reduction is not implemented there, and wherein the sealing edge (32,34) exhibits a width up to a maximum of 5.0 mm in axial direction (16) and measured in the sliding surface (36) facing the sliding partner, and wherein the bearing shell has a wall thickness in the reduced wall thickness end area (22,24) continuously decreasing in the circumferential direction (20) towards the separation planes (8,10), **characterized in that** the sealing edge (32,34) extends along a circumferential length of minimum 5° and up to a maximum of 35°, starting from the separation planes (8,10), and that the bearing shell has a wall thickness which in radial direction (18) is by at most 0,1 mm larger than the reduced wall thickness end area (22,24) located in axial direction in between.

2. Slide bearing shell in accordance with Claim 1, **characterized in that** the sealing edge (32,34) extends along a circumferential length of minimum 10° and up to a maximum of 35° starting from the separation plane (8,10).

3. Slide bearing shell in accordance with Claim 1 or 2, **characterized in that** the sealing edges (32, 34) exhibits a width of up to 3.0 mm, and farther in particular of minimum 0.5 mm and farther of minimum 1 mm in axial direction (16) and measured in the sliding area (36) facing the sliding partner.

4. Slide bearing shell according to one or more of the above mentioned Claims, **characterized in that** the bearing shell has a wall thickness which in radial direction (18) is by 0.01-0.08 mm, in particular by 0.15-0.07 mm, and farther in particular by 0.02-0.06 mm larger than the reduced wall thickness end area (22,24) located in axial direction (16) in between.

5. Slide bearing shell according to one or more of the above mentioned claims, **characterized in that** the sealing edge (32, 34) lies in the sliding area (36) facing the sliding partner over its entire length in circumferential direction (20).

## Revendications

1. Coussinet de palier lisse (2), en particulier pour des applications de moteur, en particulier pour des paliers principaux ou des palier de bielle, avec une couche de glissement (6) en un alliage de palier lisse métallique, avec deux surfaces de séparation (8, 10) formant les extrémités circonférentielles du coussinet de palier lisse et deux côtés circonférentiels axiaux (12, 14), et avec une surface de glissement (36) pour un partenaire de glissement, dans lequel le coussinet de palier lisse est doté d'une forme environ semi-circulaire à partir d'un tronçon de platine métallique, et est formé dans une section d'extrémité respectif (22, 24) dans la direction circonférentielle (20) à partir de la surface de glissement (36) vers les surfaces de séparation (8, 10) jusqu'à une épaisseur de paroi réduite, dans lequel un bord d'étanchéité (32, 34) s'étendant dans la direction circonférentielle (20) est prévu dans la zone des deux sections d'extrémités respectif (22, 24) ayant une épaisseur de paroi réduite dans la zone des deux côtés circonférentiels axiaux (12, 14), qui délimite des deux côtés la section d'extrémité (22, 24) ayant une épaisseur de paroi réduite, en formant ainsi une barrière pour l'écoulement d'huile, dans lequel le bord d'étanchéité (32, 34) est formé tandis que la réduction d'épaisseur de paroi n'a pas été réalisée là, et dans lequel le bord d'étanchéité (32, 34) présente une largeur dans la direction axiale (16) et mesurée dans la surface coulissante (36) pour un partenaire de glissement jusqu'à un maximum de 5,0 mm, et dans lequel le coussinet de palier lisse présente, dans la section d'extrémité (22, 24) ayant une épaisseur de paroi réduite, une épaisseur de paroi en constante diminution dans la direction circonférentielle (20) jusqu'aux surfaces de séparation (8, 10), **caractérisé en ce que** le bord d'étanchéité (32, 34) s'étant à partir de la surface de séparation (8, 10) sur une longueur circonférentielle d'au moins 5° et d'au plus 35°, et **en ce que** le coussinet de palier lisse, dans la zone du bord d'étanchéité (32, 34) dans la direction radiale (18) présente une épaisseur de paroi supérieure d'un maximum de 0,01 mm à la section d'extrémité (22, 24) ayant une épaisseur de paroi réduite dans la direction axiale (16) entre les deux.

2. Coussinet de palier lisse selon la revendication 1, **caractérisé en ce que** le bord d'étanchéité (32, 34) s'étend à partir de la surface de séparation (8, 10) sur une longueur circonférentielle d'au moins 10° et en particulier d'au plus 30°.

3. Coussinet de palier lisse selon la revendication 1 ou 2, **caractérisé en ce que** le bord d'étanchéité (32, 34) présente une largeur dans la direction axiale (16), et mesurée, dans la surface de glissement (36) destinée à un partenaire de glissement allant jusqu'à 3 mm, et particulièrement de moins de 0,5 mm, et encore plus particulièrement de moins de 1 mm.

4. Coussinet de palier lisse selon l'une quelconque des revendications précédentes, **caractérisé en ce que** le coussinet de palier présente, dans la zone du bord d'étanchéité (32, 34) dans la direction radiale (18), une épaisseur de paroi supérieure de 0,01 à 0,08 mm, en particulier de 0,015 à 0,07 mm, et plus particulièrement de 0,02 à 0,06 mm à la section d'extrémité (22, 24) ayant une épaisseur de paroi réduite dans la direction axiale (16) entre les deux.

5. Coussinet de palier lisse selon l'une quelconque des revendications précédentes, **caractérisé en ce que** le bord d'étanchéité (32, 34) s'étend dans la même direction circonférentielle (20) dans la surface de glissement (36) pour un partenaire de glissement.
